# EUROPÄISCHE PATENTANMELDUNG

(11) **EP 4 202 116 A1**
(43) Veröffentlichungstag der Anmeldung: **28.06.2023**
(21) Anmeldenummer: 21216290.3
(22) Anmeldetag: 21.12.2021
(51) Int. Cl.: D21F 3/02, C08G 18/10

(54) **PRESSMANTEL FÜR EINE SCHUHPRESSE BZW. TRANSPORTBAND MIT VERBESSERTEN BRUCH- UND REISSEIGENSCHAFTEN**

(71) Anmelder: Voith Patent GmbH, 89522 Heidenheim (DE)
(72) Erfinder: Delmas, Delphine, 89522 Heidenheim (DE)
(74) Vertreter: Voith Patent GmbH - Patentabteilung

(57) **Zusammenfassung**

Die vorliegende Erfindung betrifft einen Pressmantel für eine Presswalze, insbesondere für eine Presswalze einer Schuhpresse zur Entwässerung einer Faserstoffbahn, insbesondere einer Papier-, Karton-, Tissue- oder Zellstoffbahn, oder Transportband, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine Polyurethan enthaltende Schicht umfasst, wobei das Polyurethan durch Reagieren eines Präpolymers und einer Vernetzerkomponente gebildet ist, wobei das Präpolymer ein Reaktionsprodukt von einer Isocyanatkomponente und einer Polyolkomponente ist, wobei die Isocyanatkomponente i) 1,3-Xylylendiisocyanat (m-XDI) und/oder 1,3-Bis(isocyanatomethyl)cyclohexan (m-H₆XDI) in einer Menge von wenigstens 50 Gew.-% enthält und ii), wobei die Polyolkomponente mindestens ein Polycarbonatpolyol in einer Menge von wenigstens 50 Gew.-% enthält.

## Beschreibung

Die vorliegende Erfindung betrifft einen Pressmantel für eine Presswalze, insbesondere für eine Presswalze einer Schuhpresse zur Entwässerung einer Faserstoffbahn, insbesondere einer Papier-, Karton-, Tissue- oder Zellstoffbahn, oder Transportband, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine Polyurethan enthaltende Schicht umfasst. Ferner betrifft die vorliegende Erfindung ein Verfahren zur Herstellung eines solchen Pressmantels bzw. Transportbandes, einen entsprechenden Pressmantel sowie ein entsprechendes Transportband.

Presswalzen werden in einer Vielzahl von Pressen und beispielsweise in der Form von Schuhwalzen in Schuhpressen eingesetzt, welche wiederum insbesondere zur Entwässerung von Faserstoffbahnen, wie Papierbahnen, verwendet werden. Derartige Schuhpressen sind aus einer Schuhwalze und einer Gegenwalze mit einem dazwischen ausgebildeten Pressspalt aufgebaut. Dabei bestehen Schuhwalzen aus einem stationären, d. h. nicht rotierenden, Presselement, nämlich dem Schuh, und aus einem den Schuh umlaufenden flexiblen Pressmantel. Üblicherweise wird der Schuh durch ein diesen tragendes Joch abgestützt und über hydraulische Presselemente an den diesen umlaufenden Pressmantel angepresst. Dabei wird in der Regel zwischen dem Schuh und dem Pressmantel zur Schmierung ein Ölfilm aufgebaut. Aufgrund der konkaven Ausgestaltung des Schuhs an seiner der Gegenwalze gegenüberliegenden Seite ergibt sich ein vergleichsweise langer Pressspalt, welcher etwa 20-mal länger ist als der von herkömmlichen, aus zwei umlaufenden Walzen bestehenden Pressen.

Bei dem Betrieb der Schuhpresse wird eine Faserstoffbahn zusammen mit einem oder zwei Pressfilz(en) durch den Pressspalt geführt, wobei die aufgrund des in dem Pressspalt auf die Faserstoffbahn ausgeübten Drucks aus der Faserstoffbahn austretende Flüssigkeit, welche neben Wasser gelöste und ungelöste Verbindungen, wie beispielsweise Fasern, Faserbruchstücke, Füllstoffe und/oder Additive, enthält, von dem Pressfilz und von in der Pressmanteloberfläche vorgesehen Vertiefungen vorübergehend aufgenommen wird. Nach dem Verlassen des Pressspalts wird die von dem Pressmantel aufgenommene Flüssigkeit von dem Pressmantel abgeschleudert, bevor der Pressmantel erneut in den Pressspalt eintritt. Zudem wird das von dem Pressfilz aufgenommene Wasser nach dem Verlassen des Pressspalts mit Saugelementen entfernt. Aufgrund des wegen der konkaven Ausgestaltung des Schuhs vergleichsweise langen Pressspalts wird mit einer solchen Schuhpresse im Vergleich zu einer aus zwei rotierenden Walzen bestehenden Presse eine wesentlich bessere Entwässerung der Faserstoffbahn erreicht, so dass die nachfolgende thermische Trocknung entsprechend kürzer ausfallen kann. Auf diese Weise wird eine besonders schonende Entwässerung der Faserstoffbahn erreicht.

Ein Pressmantel einer solchen Schuhpresse muss idealerweise eine Vielzahl von Anforderungen erfüllen, um zu optimalen Ergebnissen zu führen. Zum einen muss ein solcher Pressmantel ausreichend flexibel sein, um um den Schuh herum geführt werden zu können. Gleichzeitig muss der Pressmantel ausreichend hart und steif sein, um nicht unter der in dem Pressspalt herrschenden Presslast zu stark verformt und deformiert zu werden. Zudem muss ein Pressmantel eine hohe Verschleißbeständigkeit, eine gute Abriebsfestigkeit, eine geringe Quellung in Wasser und andere Eigenschaften, wie eine hohe Rissbildungsbeständigkeit, eine gute Risswachstumsbeständigkeit, eine hohe Bruchdehnung und eine hohe Bruchkraft, aufweisen.

Um diese mannigfaltigen Anforderungen zumindest teilweise zu erfüllen, sind solche Pressmäntel üblicherweise aus faserverstärktem Polyurethan aufgebaut, also aus einem Verbundwerkstoff, bei dem in einer Matrix aus Polyurethan ein Fasergelege oder Fasergewebe eingebettet ist. Dabei sind sowohl einlagige als auch entsprechende mehrlagige Pressmäntel bekannt.

Aus der EP 2 284 314 A1 ist ein Pressmantel für eine Schuhpresse bekannt, welcher aus einer oder mehreren Lagen aus Polyurethan, in das Fasergewebe eingebettet ist, zusammengesetzt ist. Dabei ist das Polyurethan das Reaktionsprodukt aus einem Präpolymer, das aus einer 55 bis 100 Mol-% p-Phenylendiisocyanat (PPDI) enthaltenden Isocyanatkomponente und einem Polyol hergestellt worden ist, und einer Vernetzerkomponente, welche 65 bis 100 Mol-% eines oder mehrere bestimmter Polyamine enthält. Das Polyol ist bevorzugt Polytetramethylenglycol (PTMG).

Aus der EP 2 737 124 B1 ist ein Pressmantel für eine Schuhpresse bzw. ein Transportband bekannt, wobei der Pressmantel bzw. das Transportband wenigstens eine vernetztes Polyurethan enthaltende Schicht umfasst, wobei das vernetzte Polyurethan durch ein Verfahren erhältlich ist, bei dem ein Präpolymer, welches das Reaktionsprodukt einer Methylendiphenyldiisocyanat (MDI) enthaltenden Isocyanatkomponente und einer ein Polycarbonatpolyol enthaltenden Polyolkomponente ist, mit einer Vernetzerkomponente reagiert wird, welche wenigstens ein Polyol mit einem gewichtsgemittelten Molekulargewicht von mehr als 1.000 g/mol enthält.

Obwohl die aus der letztgenannten Druckschrift bekannten Pressmäntel eine vergleichsweise hohe Beständigkeit gegenüber Wasser und Chemikalien, eine gute Hydrolysebeständigkeit sowie eine niedrige Quellung aufweisen, sind deren mechanischen Eigenschaften und insbesondere deren Bruch- und Reißeigenschaften verbesserungsbedürftig.

Aufgabe der vorliegenden Erfindung ist daher die Bereitstellung eines Pressmantels bzw. eines Transportbandes, wobei der Pressmantel bzw. das Transportband verbesserte mechanische Eigenschaften und insbesondere eine höhere Bruchdehnung, eine höhere Bruchkraft sowie eine höhere Weiterreißfestigkeit aufweist.

Erfindungsgemäß wird diese Aufgabe gelöst durch die Bereitstellung eines Pressmantels für eine Presswalze, insbesondere für eine Presswalze einer Schuhpresse zur Entwässerung einer Faserstoffbahn, insbesondere einer Papier-, Karton-, Tissue- oder Zellstoffbahn, oder Transportband, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine Polyurethan enthaltende Schicht umfasst, wobei das Polyurethan durch Reagieren eines Präpolymers und einer Vernetzerkomponente gebildet ist, wobei das Präpolymer ein Reaktionsprodukt von einer Isocyanatkomponente und einer Polyolkomponente ist, wobei die Isocyanatkomponente i) 1,3-Xylylendiisocyanat (m-XDI) und/oder 1,3-Bis(isocyanatomethyl)cyclohexan (m-H₆XDI) in einer Menge von wenigstens 50 Gew.-% enthält und ii), wobei die Polyolkomponente mindestens ein Polycarbonatpolyol in einer Menge von wenigstens 50 Gew.-% enthält.

Überraschenderweise wurde im Rahmen der vorliegenden Erfindung festgestellt, dass eine Schicht aus Polyurethan, das durch Vernetzen eines Präpolymers gebildet aus dem Reaktionsprodukt von i) m-XDI und/oder m-H₆XDI und einer wenigstens 50 Gew.-% Polycarbonatpolyol enthaltenden Polyolkomponente erhalten worden ist, im Vergleich zu einer Schicht aus den entsprechenden üblichen, beispielsweise aus MDI, Polycarbonatpolyol und Vernetzer erhaltenem Polyurethan verbesserte mechanische Eigenschaften und insbesondere eine höhere Bruchdehnung, eine höhere Bruchkraft sowie eine höhere Weiterreißfestigkeit aufweist. Zudem war es überraschend, dass sich eine solche Schicht aus Polyurethan dennoch durch gute andere erforderliche Eigenschaften auszeichnet, wie eine gute Härte, ein hohes Elastizitätsmodul, eine hervorragende Verschleißbeständigkeit, eine exzellente Abriebsfestigkeit, eine niedrige Quellung in Wasser sowie eine exzellente Beständigkeit gegenüber Chemikalien, wie insbesondere Wasser, Öl, Säuren, Basen und Lösemitteln. Zwar wurde in Druckschriften vereinzelt, beispielsweise für Polyurethane auf Basis von PPDI und PTMG neben einer Vielzahl von Isocyanaten m-XDI katalogartig als mögliche Isocyanatkomponente oder, unabhängig davon, Polycarbonat als mögliche Polyolkomponente genannt, ohne jedoch die Kombination m-XDI und Polycarbonat zu nennen und insbesondere ohne irgendeinen Hinweis auf vorteilhafte Eigenschaften, geschweige denn auf die vorgenannten vorteilhaften Eigenschaften zu enthalten.

Erfindungsgemäß enthält die Isocyanatkomponente, aus der das Präpolymer durch Reaktion mit der Polyolkomponente gebildet worden ist, wenigstens 50 Gew.-% 1,3-Xylylendiisocyanat (m-XDI) und/oder 1,3-Bis(isocyanatomethyl)-cyclohexan (m-H₆XDI). Gute Ergebnisse werden insbesondere erhalten, wenn die die Isocyanatkomponente bevorzugt wenigstens 90 Gew.-%, besonders bevorzugt wenigstens 95 Gew.-%, ganz besonders bevorzugt wenigstens 99 Gew.-% m-XDI und/oder m-H₆XDI enthält und höchst bevorzugt aus m-XDI und/oder m-H₆XDI besteht. Sofern die Isocyanatkomponente nicht vollständig aus m-XDI und/oder m-H₆XDI besteht, kann diese weitere übliche Isocyanate enthalten, wie beispielsweise ein oder mehrere ausgewählt aus der Gruppe bestehend aus Toluol-2,4-diisocyanaten (TDI), Methylendiphenylisocyanaten (MDI), Hexamethylendiisocyanaten (HDI), 1,5-Naphthalindiisocyanaten (NDI), Isophorondiisocyanaten (IPDI), Cyclohexandiisocyanaten (CHDI), Phenylendiisocyanaten (PPDI), Toluoldiisocyanaten (TODI), 3,3'-Dimethyl-4,4'-biphenyldiisocyanat und Mischungen aus zwei oder mehr der vorgenannten Verbindungen. Allerdings ist es, wie dargelegt, besonders bevorzugt, dass die Isocyanatkomponente vollständig oder zumindest nahezu vollständig aus m-XDI und/oder m-H₆XDI besteht.

Unter Polyolen werden im Sinne der vorliegenden Erfindung alle Alkohole verstanden, welche mindestens zwei Hydroxylgruppen aufweisen und vorzugsweise ein gewichtsgemitteltes Molekulargewicht von 500 bis 10.000 g/mol aufweisen.

Bezüglich der Zusammensetzung des mindestens einen in der Polyolkomponente enthaltenden Polycarbonatpolyols ist die vorliegende Erfindung nicht besonders beschränkt. Polycarbonatpolyol bezeichnet im Sinne der vorliegenden Erfindung alle Polyole, die neben Hydroxylgruppen mindestens eine Carbonatgruppe als funktionelle Gruppen enthalten. Polyole können mithin neben Hydroxylgruppen und Carbonatgruppe(n) mindestens eine andere funktionelle Gruppe enthalten, wie ein oder mehrere Ethergruppen, also Polyethercarbonate sein. Vorzugsweise enthält das Polycarbonatpolyol terminale Hydroxylgruppen und besonders bevorzugt ist das Polycarbonatpolyol ein Carboxylgruppen und ggf. weitere funktionelle Gruppen enthaltendes Diol. Gemäß einer illustrativen, aber nicht beschränkenden Ausführungsform enthält das Polycarbonatpolyol neben terminalen Hydroxylgruppen nur Carbonatgruppen als funktionelle Gruppen. Insbesondere kann es sich bei dem mindestens einen in der Polyolkomponente enthaltenden Polycarbonatpolyol um ein Polycarbonathomopolyol, um ein Polycarbonatcopolyol oder eine Mischung hiervon handeln, und zwar unabhängig davon, ob es neben den Hydroxyl- und Carbonatgruppen noch ein oder mehrere weitere funktionelle Gruppen enthält oder nicht.

Insbesondere kann es sich bei dem mindestens einen in der Polyolkomponente enthaltenden Polycarbonatpolyol um ein Polycarbonathomopolyol, um ein Polycarbonatcopolyol oder eine Mischung hiervon handeln.

Gemäß einer ersten besonders bevorzugten Ausführungsform der vorliegenden Erfindung enthält die Polyolkomponente mindestens ein Polycarbonatpolyol gemäß der allgemeinen Formel (I):

H-(O-R¹-O-C(O))ₙ₁-O-H (I),

worin R¹ aus linearen C₁-C₂₀-Alkylengruppen und verzweigten C₁-C₂₀-Alkylengruppen ausgewählt ist und n¹ eine ganze Zahl von mindestens 2 ist.

Als Alkylengruppe wird im Sinne der vorliegenden Erfindung eine CₙH₂ₙ-Kohlenwassersoffgruppe verstanden, also eine Kohlenwasserstoffgruppe mit zwei endständigen Radikalen.

Gute Ergebnisse werden insbesondere erhalten, wenn in der allgemeinen Formel (I) n₁ eine ganze Zahl zwischen 3 und 100, besonders bevorzugt zwischen 4 und 25 und ganz besonders bevorzugt zwischen 5 und 20 ist.

Vorzugsweise ist R¹ in der allgemeinen Formel (I) aus linearen C₄-C₁₄-Alkylengruppen und verzweigten C₄-C₁₄-Alkylengruppen, besonders bevorzugt aus linearen C₄-C₁₀-Alkylengruppen, ganz besonders bevorzugt aus linearen C₅-C₁₀-Alkylengruppen und höchst bevorzugt einer C₆- oder C₁₀-Alkylengruppe, also Hexylengruppe, ausgewählt.

Es ist bevorzugt, dass die Polyolkomponente wenigstens 50 Gew.-%, weiter bevorzugt wenigstens 70 Gew.-% und noch weiter bevorzugt wenigstens 90 Gew.-% eines oder mehrerer Polycarbonate mit der allgemeinen Formel (I) enthält. Gute Ergebnisse werden auch erhalten, wenn die Polyolkomponente im Wesentlichen vollständig aus einem oder mehreren Polycarbonaten mit der allgemeinen Formel (I) besteht, d.h. wenigstens 95 Gew.-%, weiter bevorzugt wenigstens 99 Gew.-% und höchst bevorzugt 100 Gew.-% eines oder mehrerer Polycarbonate mit der allgemeinen Formel (I) enthält. Wie weiter unten dargelegt, kann die Polyolkomponente jedoch zur Einstellung der Viskosität auch andere Polyole, die kein Polycarbonat sind, in einer Menge von bis zu weniger als 50 Gew.-% enthalten. Gemäß einer zweiten besonders bevorzugten Ausführungsform der vorliegenden Erfindung enthält das Polycarbonatpolyol zwei oder mehr verschiedene Alkylengruppen, wie insbesondere zwei, drei oder vier verschiedene Alkylengruppen. Beispielsweise kann das Polycarbonatpolyol eine erste C₁-C₂₀-Alkylengruppe A, wie eine lineare C₃-Alkylengruppe, und eine zweite, von der ersten verschiedene C₁-C₂o-Alkylengruppe B, wie eine lineare C₆-Alkylengruppe, aufweisen. Die beiden Gruppen können dann abwechselnd, blockweise oder zufällig angeordnet sein, beispielsweise ABAB, AAAB, AABB, BBAA, ABBB oder BAAA.

Ein bevorzugtes Beispiel für ein solches Polycarbonatpolyol ist ein Polycarbonatpolyol gemäß der allgemeinen Formel (II):

H-(O-R²-O-C(O))ₙ₂-O-R³-O-C(O)ₙ₃-O-H (II),

worin R² und R³ voneinander verschiedenen sind und unabhängig voneinander ausgewählt sind aus linearen C₁-C₂₀-Alkylengruppen und verzweigten C₁-C₂₀-Alkylengruppen und n₂ sowie n₃, unabhängig voneinander, eine ganze Zahl von mindestens 1 sind.

Gute Ergebnisse werden insbesondere erhalten, wenn in der allgemeinen Formel (II) n₂ sowie n₃, unabhängig voneinander, eine ganze Zahl zwischen 3 und 100, bevorzugt zwischen 4 und 25 und besonders bevorzugt zwischen 5 und 20 sind.

Vorzugsweise sind in der allgemeinen Formel (II) R² und R³ voneinander verschiedenen und unabhängig voneinander ausgewählt aus linearen C₄-C₁₄-Alkylengruppen und verzweigten C₄-C₁₄-Alkylengruppen und besonders bevorzugt aus linearen C₄-C₁₀-Alkylengruppen.

In Weiterbildung des Erfindungsgedankens wird es vorgeschlagen, dass die Gruppen R² und R³ in der allgemeinen Formel (II) i) eine lineare C₄-C₁₀-Alkylengruppe sowie eine lineare C₁₀-Alkylengruppe oder ii) eine lineare C₅-Alkylengruppe sowie eine lineare C₆-Alkylengruppe oder iii) eine lineare C₄-Alkylengruppe sowie eine lineare C₁₀-Alkylengruppe sind.

Es ist bevorzugt, dass die Polyolkomponente wenigstens 50 Gew.-%, weiter bevorzugt wenigstens 70 Gew.-% und noch weiter bevorzugt wenigstens 90 Gew.-% i) eines oder mehrerer Polycarbonate mit der allgemeinen Formel (I), ii) eines oder mehrerer Polycarbonate mit der allgemeinen Formel (II) oder ii) einer Mischung von Polycarbonate(n) mit der allgemeinen Formel (I) mit Polycarbonate(n) mit der allgemeinen Formel (II) enthält. Gute Ergebnisse werden auch erhalten, wenn die Polyolkomponente im Wesentlichen aus i) einem oder mehreren Polycarbonaten mit der allgemeinen Formel (I) ii) oder einem oder mehreren Polycarbonaten mit der allgemeinen Formel (II), iii) einer Mischung von Polycarbonate(n) mit der allgemeinen Formel (I) mit Polycarbonate(n) mit der allgemeinen Formel (II) besteht, d.h. wenigstens 95 Gew.-%, weiter bevorzugt wenigstens 99 Gew.-% und höchst bevorzugt 100 Gew.-% eines oder mehrerer Polycarbonate mit der allgemeinen Formel (I) oder einer Mischung von Polycarbonate(n) mit der allgemeinen Formel (I) mit Polycarbonate(n) mit der allgemeinen Formel (II) enthält. Wie weiter unten dargelegt, kann die Polyolkomponente jedoch zur Einstellung der Viskosität auch andere Polyole, die kein Polycarbonat sind, in einer Menge von bis zu weniger als 50 Gew.-% enthalten.

Unabhängig davon, ob die Polyolkomponente ein oder mehrere Polycarbonatpolyole gemäß der allgemeinen Formel (I) und/oder ein oder mehrere Polycarbonatpolyole gemäß der allgemeinen Formel (II) und/oder andere Polycarbonatpolyole enthält, ist es bevorzugt, dass das bzw. die Polycarbonatpolyole ein gewichtsgemitteltes Molekulargewicht von 500 bis 10.000 g/mol, bevorzugt von 800 bis 4.000 g/mol und besonders bevorzugt von 800 bis 3.000 g/mol aufweisen. Das Molekulargewicht kann durch Gelpermeationschromatographie gegen einen Polystyrolstandard bestimmt werden. Allerdings ist es gemäß der vorliegenden Erfindung bevorzugt, das gewichtsgemittelte Molekulargewicht der Struktureinheiten über die Hydroxylzahl zu bestimmen, also über diejenige Menge an Kaliumhydroxid in Milligramm, welche der bei der Acetylierung von 1 g Substanz gebundenen Menge Essigsäure äquivalent ist. Die Hydroxylzahl kann durch Rücktitration gemäß der DIN 53240 erfolgen und wird in mg KOH/g angegeben. Das gewichtsgemittelte Molekulargewicht kann dann bestimmt werden, im Falle von Diolen beispielsweise durch Division von 112.200 durch die Hydroxylzahl.

Wie vorstehend dargelegt, kann die Polyolkomponente in einer Menge von bis zu weniger als 50 Gew.-% mindestens eines anderen Polyols enthalten, welches kein Polycarbonatpolyol ist. Diese Ausführungsform kann vorteilhaft sein, wenn andernfalls die Viskosität des Präpolymers zu hoch wird, so dass durch das Zusetzen eines anderen Polyols, der kein Polycarbonatpolyol ist, die Viskosität des Präpolymers verringert wird.

Beispielsweise kann das mindestens eine andere Polyol aus der Gruppe ausgewählt sein, welche aus Polyetherpolyolen, Polyetherpolycarbonatpolyolen und Mischungen hiervon besteht.

Besonders bevorzugt ist das mindestens eine andere Polyol mindestens ein Polytetramethylenglycol. Gute Ergebnisse werden insbesondere erhalten, wenn das mindestens eine Polytetramethylenglycol ein gewichtsgemitteltes Molekulargewicht von 100 bis 10.000 g/mol, bevorzugt von 500 bis 5.000 g/mol, besonders bevorzugt von 800 bis 3.000 g/mol und höchst bevorzugt von 800 bis 2.500 g/mol aufweist.

Das mindestens eine andere Polyol ist in dieser Ausführungsform in der Polyolkomponente bevorzugt in einer Menge von 1 bis weniger als 50 Gew.-%, besonders bevorzugt in einer Menge von 2 bis 30 Gew.-% und höchst bevorzugt in einer Menge von 5 bis 20 Gew.-% enthalten.

Anstelle durch den Zusatz einer mindestens ein anderes Polyols, welches kein Polycarbonatpolyol ist, kann die Viskosität des Präpolymers, sofern überhaupt erforderlich, auch durch den Zusatz mindestens einer Isocyanatverbindung zu dem Polyurethan verringert werden. Selbstverständlich ist es auch möglich, beide Maßnahmen zu kombinieren, also der Polyolkomponente mindestens ein anderes Polyols, welches kein Polycarbonatpolyol ist, zusetzen und dem Polyurethan mindestens eine Isocyanatverbindung zusetzen. Die Isocyanatverbindung ist in dieser Ausführungsform in dem Polyurethan frei, also in monomerer Form enthalten. Mithin wird die Isocyanatverbindung erst nach der Ausbildung des Präpolymers zugesetzt, so dass diese nicht in das Präpolymer eingebaut wird.

In Weiterbildung des Erfindungsgedankens wird es vorgeschlagen, dass das Polyurethan bis zu 15 Gew.-% mindestens einer Isocyanatverbindung enthält, wobei die mindestens eine Isocyanatverbindung vorzugsweise aus der Gruppe ausgewählt ist, welche aus Methylendiphenylisocyanaten (MDI), Toluoldiisocyanaten (TODI) und beliebigen Mischungen hiervon besteht. Vorzugsweise beträgt die Menge der mindestens einen Isocyanatverbindung maximal 10 Gew.-%, besonders bevorzugt maximal 5 Gew.-% und höchst bevorzugt maximal 2 Gew.-%.

Bezüglich der Zusammensetzung der Vernetzerkomponente ist die vorliegende Patentanmeldung nicht besonders limitiert. Beispielsweise kann die Vernetzerkomponente wenigstens ein aliphatisches Diol und/oder wenigstens ein aliphatisches Diamin und/oder wenigstens ein aromatisches Diamin enthalten.

Geeignete Beispiele für als Vernetzer geeignete aliphatisches Diole sind solche gemäß der allgemeinen Formel (III):

HO-(CH₂)ₓ-OH (III),

worin x eine ganze Zahl zwischen 2 und 14 ist. Besonders bevorzugt ist x eine ganze Zahl von 4, von 6, von 8, von 10, von 12 oder von 14 ist und höchst bevorzugt von 4 oder von 6.

Geeignete Beispiele für Diole sind Ethylenglycol, Diethylenglycol, Propylenglycol, Dipropylenglycol, 1,4-Butandiol, 1,3-Propandiol, 1,5-Pentandiol, 1,6-Hexandiol, N-N'-Bis-(2-hydroxypropylanilin), Hydrochinon-bis-2-hydroxyethylether, 1,3-Bis(2-hydroxyethyl)resorcin und beliebige Mischungen aus zwei oder mehr der vorgenannten Verbindungen.

Geeignete Beispiele für als Vernetzer geeignete aliphatische Diamine sind Diamine, welche aus der Gruppe ausgewählt sind, welche aus Ethylendiamin (EDA), 2,2,4-Trimethyl-1 ,6-hexandiamin, 2,4,4-Trimethyl-1 ,6-hexandiamin, Hexamethylendiamin (HMDA) und Mischungen hiervon besteht.

Ein geeignetes Beispiel für als Vernetzer geeignete aromatische Diamine ist Bis(4-amino-2-chloro-3,5-diethylphenyl)methan (MCDEA).

Besonders bevorzugt enthält die Vernetzerkomponente MCDEA, und zwar bevorzugt in einer Menge von mindestens 50 Gew.-%.

Zusätzlich zu aliphatischem Diol und/oder aliphatischem Diamin und/oder aromatischem Diamin oder anstelle zu aliphatischem Diol und/oder aliphatischem Diamin und/oder aromatischem Diamin kann die Vernetzerkomponente wenigstens ein Alkanolamin enthalten, wobei das wenigstens eine Alkanolamin vorzugsweise ein C₁₋₆-Alkylmonohydroxymonoamin und besonders bevorzugt Monoethanolamin ist.

Ferner kann die Vernetzerkomponente ein Triol oder ein Polyol enthalten, wobei das Polyol beispielsweise ein Polyethylenglycol, ein Polypropylenglycol, ein Polybutylenglycol und/oder ein Polytetrahydrofuran, oder auch ein Polycarbonatpolyol oder ein Polyethercarbonatpolyol sein kann.

Ferner ist es bevorzugt, dass die Vernetzerkomponente zusätzlich wenigstens einen Katalysator enthält, welcher vorzugsweise eine tertiäre Aminverbindung und/oder eine organometallische Verbindung ist. Gute Ergebnisse werden insbesondere erzielt, wenn der wenigstens eine Katalysator eine tertiäre Aminverbindung ausgewählt aus der Gruppe ist, welche aus 1 ,4-Diazabicyclo(2.2.2)octan (DABCO) auch Triethylendiamin (TEDA) genannt, Triethylamin und Mischungen hiervon besteht. Ebenso gute Ergebnisse werden erhalten, wenn der wenigstens eine Katalysator eine organometallische Verbindung mit einem Metall ausgewählt aus der Gruppe bestehend aus Bismuth, Quecksilber, Aluminium, Zirconium, Eisen, Calcium, Natrium, Kalium, Blei, Zinn, Titan und Mischungen hiervon enthält. Besonders bevorzugt ist der wenigstens eine Katalysator 1 ,4-Diazabicyclo(2.2.2)-octan (DABCO) und/oder Bismuth-Neodecanoat.

Gemäß einer ganz besonders bevorzugten Ausführungsform der vorliegenden Erfindung besteht die Isocyanatkomponente aus m-XDI und/oder m-H₆XDI, besteht die Polyolkomponente aus ein oder mehreren Polycarbonatpolyolen und besteht die Vernetzerkomponente zum Teil, vorzugsweise wenigstens 50 Gew.-%, aus MCDEA.

Gemäß einer dazu alternativen, ganz besonders bevorzugten Ausführungsform der vorliegenden Erfindung besteht die Isocyanatkomponente aus m-XDI und/oder m-H₆XDI, besteht die Polyolkomponente aus ein oder mehreren Polycarbonatpolyolen, besteht die Vernetzerkomponente zum Teil, vorzugsweise wenigstens 50 Gew.-%, aus MCDEA und enthält das Polyurethan ferner bis zu 15 Gew.-% mindestens einer Isocyanatverbindung, welche aus der Gruppe ausgewählt ist, welche aus MDI, TODI und beliebigen Mischungen hiervon besteht.

Gemäß einer dazu alternativen, ganz besonders bevorzugten Ausführungsform der vorliegenden Erfindung besteht die Isocyanatkomponente aus m-XDI und/oder m-H₆XDI, besteht die Polyolkomponente aus einem oder mehreren Polycarbonatpolyolen sowie Polytetramethylenglycol und besteht die Vernetzerkomponente zum Teil, vorzugsweise wenigstens 50 Gew.-%, aus MCDEA.

Gemäß einer dazu alternativen, ganz besonders bevorzugten Ausführungsform der vorliegenden Erfindung besteht die Isocyanatkomponente aus m-XDI und/oder m-H₆XDI, besteht die Polyolkomponente aus ein oder mehreren Polycarbonatpolyolen sowie einem oder mehreren Polytetramethylenglycolen, besteht die Vernetzerkomponente aus MCDEA und enthält das Polyurethan ferner bis zu 5 Gew.-% mindestens einer Isocyanatverbindung, welche aus der Gruppe ausgewählt ist, welche aus MDI, TODI und beliebigen Mischungen hiervon besteht.

Vorzugsweise beträgt das Verhältnis H/NCO des Polyurethans zwischen 1,1 und 0.85.

Zur weiteren Erhöhung der Abriebsfestigkeit kann dem Polyurethan auch ein Zusatzmittel, wie beispielsweise Silikonöl, in einer Menge von 0,1 bis 3 Gew.-% und bevorzugt 0,5 bis 1,5 Gew.-%, bezogen auf das Gesamtgewicht des Polyurethans, zugesetzt sein.

Ferner ist es bevorzugt, wenn die Polyurethanschicht des Pressmantels bzw. des Transportbandes nur ein Polyurethan, d.h. ein nur aus einem Präpolymer durch Reaktion des Präpolymers mit einer Vernetzerkomponente gebildetes Polyurethan umfasst.

Der erfindungsgemäße Pressmantel bzw. das erfindungsgemäße Transportband kann einschichtig oder mehrschichtig ausgebildet sein. Bei mehrschichtiger Ausgestaltung ist zumindest die äußerste Schicht aus dem zuvor beschriebenen Polyurethan zusammengesetzt.

In Weiterbildung des Erfindungsgedankens wird es vorgeschlagen, den Pressmantel bzw. das Transportband mehrschichtig auszugestalten, wobei die äußerste Schicht aus dem zuvor beschriebenen Polyurethan zusammengesetzt ist und die inneren Schicht(en) aus einem oder mehreren anderen Polyurethanen zusammengesetzt sind, wobei das Polyurethan einer inneren Schicht die Matrix ausbildet, in welcher ein Fasergelege oder ein Fasergewebe eingebettet ist.

Ein weiterer Gegenstand der vorliegenden Erfindung ist eine Schuhpresse zur Entwässerung einer Faserstoffbahn, insbesondere einer Papier-, Karton-, Tissue-oder Zellstoffbahn, welche einen zuvor beschriebenen Pressmantel umfasst.

Ferner betrifft die vorliegende Erfindung eine Maschine zur Herstellung oder Behandlung einer Faserstoffbahn, insbesondere Papier-, Karton- oder Tissuemaschine, welche ein zuvor beschriebenes Transportband umfasst.

Schließlich betrifft die vorliegende Erfindung ein Verfahren zum Herstellen eines zuvor beschriebenen Pressmantels oder Transportbandes, welches die folgenden Schritte umfasst:
a) Bereitstellen zumindest eines, rotierbar gelagerten Wickeldorns,
b) Bereitstellen einer zuvor beschriebenen Vernetzerkomponente,
c) Bereitstellen eines Präpolymers als Produkt einer Reaktion einer zuvor beschriebenen Isocyanatkomponente mit einer zuvor beschriebenen Polyolkomponente,
d) Mischen des Präpolymers und der Vernetzerkomponente zum Herstellen eines Polyurethans,
e) Ausbringen des Präpolymer-Vernetzer-Gemisches auf einer Oberfläche des Wickeldorns zum Bilden zumindest einer Polymerschicht des Pressmantels bzw. des Transportbandes,
f) Aushärten der zumindest einen Polymerschicht und
g) Abnehmen des so hergestellten Pressmantels bzw. Transportbandes von dem Wickeldorn.

In Schritt c) kann die Isocyanatkomponente MDI und/oder TODI umfassen, jedoch vorzugsweise nur in geringen Mengenanteilen, d.h. nicht mehr als 15 Gew.-% bezogen auf das Polyurethan.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1:: eine schematische Ansicht einer Schuhpresse mit einem Pressmantel gemäß eines Ausführungsbeispiels der vorliegenden Erfindung und
- Fig. 2:: eine schematische Ansicht einer eine Schuhpresse und ein Transport-band umfassenden Presspartie einer Papiermaschine gemäß eines Ausführungsbeispiels der vorliegenden Erfindung.

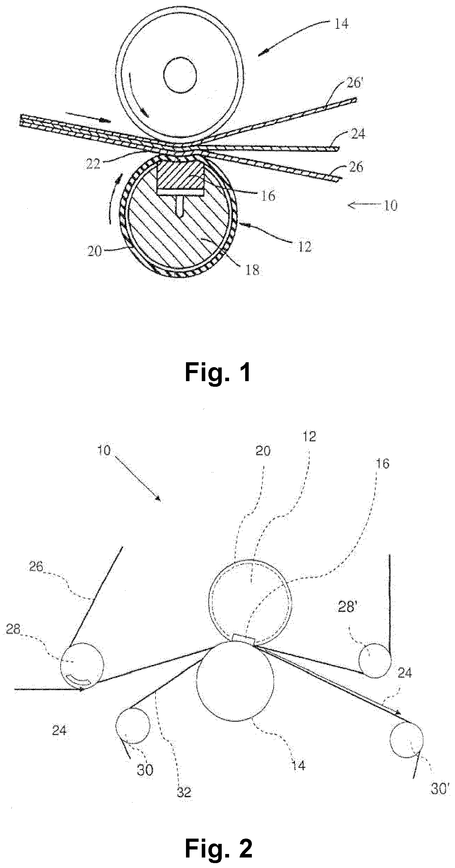

In der Fig. 1 ist eine Schuhpresse 10 dargestellt, welche eine Schuhwalze 12 und eine Gegenwalze 14 umfasst. Während die Gegenwalze 14 aus einer rotierenden zylindrisch ausgestalteten Walze besteht, ist die Schuhwalze 12 aus einem Schuh 16, einem diesen tragenden stehenden Joch 18 und einem Pressmantel 20 zusammengesetzt. Dabei wird der Schuh 16 durch das Joch 18 abgestützt und über hydraulische Presselemente (nicht dargestellt) an den diesen umlaufenden Pressmantel 20 angepresst. Aufgrund der konkaven Ausgestaltung des Schuhs 16 an seiner der Gegenwalze 14 gegenüberliegenden Seite ergibt sich ein vergleichsweise langer Pressspalt 22.

Die Schuhpresse 10 eignet sich insbesondere zur Entwässerung von Faserstoffbahnen 24, wie Papierbahnen. Bei dem Betrieb der Schuhpresse wird eine Faserstoffbahn 24 mit einem oder zwei Pressfilmen 26, 26' durch den Pressspalt 22 geführt, wobei die aufgrund des in dem Pressspalt 22 auf die Faserstoffbahn 24 ausgeübten Drucks aus der Faserstoffbahn 24 austretende Flüssigkeit, welche neben Wasser gelöste und ungelöste Verbindungen, wie beispielsweise Fasern, Faserbruchstücke, Füllstoffe und/oder Additive, enthält, von dem bzw. den Pressfilzen 26, 26' und von in der Pressmanteloberfläche vorgesehen Vertiefungen (nicht dargestellt) vorübergehend aufgenommen wird. Nach dem Verlassen des Pressspalts 22 wird die von dem Pressmantel 20 aufgenommene Flüssigkeit von dem Pressmantel 20 abgeschleudert, bevor der Pressmantel 20 erneut in den Presspalt 22 eintritt. Zudem wird das von dem Pressfilz 26, 26' aufgenommene Wasser nach dem Verlassen des Pressspalts 22 mit Saugelementen entfernt.

Aufgrund des wegen der konkaven Ausgestaltung des Schuhs 16 an seiner der Gegenwalze 14 gegenüberliegenden Seite vergleichsweise langen Pressspalts 22 wird mit einer solchen Schuhpresse 10 im Vergleich zu einer aus zwei rotierenden Walzen bestehenden Presse eine beträchtlich bessere Entwässerung der Faserstoffbahn 24 erreicht, so dass die nachfolgende thermische Trocknung entsprechend kürzer ausfallen kann. Auf diese Weise wird eine besonders schonende Entwässerung der Faserstoffbahn 24 erreicht.

In der Fig. 2 ist ein Ausschnitt einer Presspartie einer Papiermaschine gezeigt, welche eine Schuhpresse 10 umfasst. Dabei umfasst die Schuhpresse 10, wie auch bei der in der Fig. 1 dargestellten Ausführungsform, eine einen Pressmantel 20 und ein Presselement bzw. Schuh 16 aufweisende Schuhwalze 12 und eine Gegenwalze 14, wobei zwischen dem Schuh 16 und der Gegenwalze 14 ein Pressspalt ausgebildet ist. Zudem umfasst dieser Teil der Papiermaschine zwei Saugwalzen 28, 28' und zwei Umlenkwalzen 30, 30'. Bei dem Betrieb der Papiermaschine wird ein durch die Saugwalzen 28, 28' geführter Filz 26, der an der Saugwalze 28 die Faserstoffbahn 24 aufnimmt, durch den Pressspalt geführt. Zudem wird unterhalb des die Faserstoffbahn 24 führenden Filzes 26 ein durch die Umlenkwalzen 30, 30' geführtes Transportband bzw. Transferband 32 durch den Pressspalt geführt, wobei das Transferband 32 im Pressspalt die Faserstoffbahn 24 von dem Filz 26 übernimmt und über die Umlenkwalze 30' aus dem Pressspalt abführt. Aufgrund des in dem Pressspalt auf die Faserstoffbahn 24 ausgeübten Drucks tritt aus der Faserstoffbahn Flüssigkeit aus, welche neben Wasser gelöste und ungelöste Verbindungen, wie beispielsweise Fasern, Faserbruchstücke, Füllstoffe und/oder Additive, enthält, welche von dem Filz 26 und von in der Pressmanteloberfläche vorgesehen Vertiefungen vorübergehend aufgenommen wird. Nach dem Verlassen des Pressspalts wird die von dem Pressmantel 20 aufgenommene Flüssigkeit von dem Pressmantel 20 abgeschleudert, bevor der Pressmantel 20 erneut in den Presspalt eintritt. Zudem wird das von dem Filz 26 aufgenommene Wasser nach dem Verlassen des Pressspalts mit an der Saugwalze 28' vorgesehene Saugelementen entfernt. Aufgrund des wegen der konkaven Ausgestaltung des Schuhs 16 vergleichsweise langen Pressspalts wird mit einer solchen Schuhpresse im Vergleich zu einer aus zwei rotierenden Walzen bestehenden Presse eine wesentlich bessere Entwässerung der Faserstoffbahn 24 erreicht, so dass die nachfolgende thermische Trocknung entsprechend kürzer ausfallen kann. Auf diese Weise wird eine besonders schonende Entwässerung der Faserstoffbahn 24 erreicht.

Nachfolgend wird die vorliegende Erfindung rein beispielhaft anhand vorteilhafter Ausführungsformen und unter Bezugnahme auf die nachfolgenden rein illustrativen und nicht beschränkenden Beispiele beschrieben.

### Beispiele 1 und 2

Als Präpolymer wurde folgende eingesetzt:
Beispiel 1: Ein Präpolymer aus m-XDI und einem Polycarbonat mit einem NCO-Gehalt von ca. 6%.
Beispiel 2: Ein Präpolymer aus m-H₆XDI und einem Polycarbonat mit einem NCO-Gehalt von ca. 6%.

Zudem wurde eine Vernetzerkomponente aus 40 Gew.-% eines Polycarbonatpolyols und 60 Gew.-% MCDEA hergestellt.

Der Pressmantels wurde, wie bekannt und zum Beispiel in der DE 10 2017 115 084 A1 beschrieben, mittels eines rotierbaren Wickeldorns hergestellt, in dem das Präpolymer und die Vernetzerkomponente getrennt voneinander einer, eine Mischkammer und stromabwärts hiervon eine Gießdüse umfassenden Gießeinrichtung zugeführt wurde, wobei das Präpolymer sowie die Vernetzerkomponente in der Mischkammer kontinuierlich miteinander vermischt wurden und dann die so hergestellte Mischung über die Gießdüse kontinuierlich auf den rotierenden Wickeldorn aufgebracht wurde.

Zur Bestimmung der Eigenschaften des Polyurethans wurden zudem Polyurethanplatten hergestellt, indem das Präpolymer sowie die Vernetzerkomponente miteinander vermischt wurden und dann die so hergestellte Mischung in die Form von Platten gegossen wurde. Es wurden die Härte in Shore A (gemessen gemäß DIN 53505-A), die Härte nach Hydrolyse in Shore A, das E-Modul in N/mm² (gemessen gemäß DIN 53504), die Bruchkraft (gemessen gemäß DIN 53504), die Bruchdehnung (gemessen gemäß DIN 53504) und die F-(10%) in N/mm² (gemessen gemäß DIN 53504) gemessen. Die Messergebnisse sind in der nachfolgenden Tabelle zusammengefasst.

### Vergleichsbeispiel 1

Es wurde wie in dem Beispiel 1 vorgegangen ausgenommen, dass folgenden anstelle von m-XDI MDI verwendet wurde.

Die Messergebnisse sind in der nachfolgenden Tabelle zusammengefasst.

| | Härte [ShA] (DIN 53505-A) | | Zugversuch (DIN 53504) | | | |
|---|---|---|---|---|---|---|
| | Original | nach Hydrolyse | E-Modul [N/mm²] | Bruch kraft [N/mm²] | Bruchdehnung [%] | Kraft bei 10% Dehnung [N/mm²] |
| Vergleichsbeispiel | 96 | 95 | 88 | 28 | 297 | 6,3 |
| Beispiel 1 | 97 | 95 | 89 | 55 | 373 | 6,5 |
| Beispiel 2 | 97 | 95,7 | 107 | 53 | 406 | 6,6 |

### Bezugszeichenliste

- 10: Schuhpresse
- 12: Schuhwalze
- 14: Gegenwalze
- 16: Schuh
- 18: stehendes Joch
- 20: Pressmantel
- 22: Presspalt
- 24: Faserstoffbahn
- 26, 26': Pressfilz
- 28, 28': Saugwalzen
- 30, 30': Umlenkwalzen
- 32: Transportband/Transferband

## Patentansprüche

1. Pressmantel für eine Presswalze, insbesondere für eine Presswalze einer Schuhpresse zur Entwässerung einer Faserstoffbahn, insbesondere einer Papier-, Karton-, Tissue- oder Zellstoffbahn, oder Transportband, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine Polyurethan enthaltende Schicht umfasst, wobei das Polyurethan durch Reagieren eines Präpolymers und einer Vernetzerkomponente gebildet ist, wobei das Präpolymer ein Reaktionsprodukt von einer Isocyanatkomponente und einer Polyolkomponente ist, wobei die Isocyanatkomponente i) 1,3-Xylylendiisocyanat (m-XDI) und/oder 1,3-Bis(isocyanatomethyl)cyclohexan (m-H₆XDI) in einer Menge von wenigstens 50 Gew.-% enthält und ii), wobei die Polyolkomponente mindestens ein Polycarbonatpolyol in einer Menge von wenigstens 50 Gew.-% enthält.

2. Pressmantel oder Transportband nach Anspruch 1, **dadurch gekennzeichnet, dass** die Isocyanatkomponente wenigstens 90 Gew.-%, bevorzugt wenigstens 95 Gew.-%, besonders bevorzugt wenigstens 99 Gew.-% 1,3-Xylylendiisocyanat (m-XDI) und/oder 1,3-Bis(isocyanatomethyl)cyclohexan (m-H₆XDI) enthält und höchst bevorzugt aus 1,3-Xylylendiisocyanat (m-XDI) und/oder 1,3-Bis(isocyanatomethyl)cyclohexan (m-H₆XDI) besteht.

3. Pressmantel oder Transportband nach Anspruch 1 oder 2, **dadurch gekennzeichnet, dass** das mindestens eine Polycarbonatpolyol aus der Gruppe ausgewählt ist, welche aus Polycarbonathomopolyolen, Polycarbonatcopolyolen und Mischungen hiervon besteht.

4. Pressmantel oder Transportband nach zumindest einem der vorhergehenden Ansprüche, **dadurch gekennzeichnet, dass** die Polyolkomponente mindestens ein Polycarbonatpolyol gemäß der allgemeinen Formel (I) aufweist:
H-(O-R¹-O-C(O))ₙ₁-O-H (I),
worin R¹ aus linearen C₁-C₂₀-Alkylengruppen und verzweigten C₁-C₂₀-Alkylengruppen ausgewählt ist und n¹ eine ganze Zahl von mindestens 2 ist.

5. Pressmantel oder Transportband nach Anspruch 4, **dadurch gekennzeichnet, dass** in der allgemeinen Formel (I) n₁ eine ganze Zahl zwischen 3 und 100, bevorzugt zwischen 4 und 25 und besonders bevorzugt zwischen 5 und 20 ist.

6. Pressmantel oder Transportband nach Anspruch 4 oder 5, **dadurch gekennzeichnet, dass** in der allgemeinen Formel (I) R¹ aus linearen C₄-C₁₄-Alkylengruppen und verzweigten C₄-C₁₄-Alkylengruppen, bevorzugt aus linearen C₄-C₁₀-Alkylengruppen, besonders bevorzugt aus linearen C₅-C₁₀-Alkylengruppen und höchst bevorzugt einer C₆- oder C₁₀-Alkylengruppe ausgewählt ist.

7. Pressmantel oder Transportband nach zumindest einem der vorhergehenden Ansprüche, **dadurch gekennzeichnet, dass** die Polyolkomponente mindestens ein Polycarbonatpolyol gemäß der allgemeinen Formel (II) aufweist:
H-(O-R²-O-C(O))ₙ₂-O-R³-O-C(O))ₙ₃-O-H (II),
worin R² und R³ voneinander verschiedenen sind und unabhängig voneinander ausgewählt sind aus linearen C₁-C₂₀-Alkylengruppen und verzweigten C₁-C₂₀-Alkylengruppen und n₂ sowie n₃, unabhängig voneinander, eine ganze Zahl von mindestens 1 sind.

8. Pressmantel oder Transportband nach Anspruch 7, **dadurch gekennzeichnet, dass** in der allgemeinen Formel (II) n₂ sowie n₃, unabhängig voneinander, eine ganze Zahl zwischen 3 und 100, bevorzugt zwischen 4 und 25 und besonders bevorzugt zwischen 5 und 20 sind.

9. Pressmantel oder Transportband nach Anspruch 7 oder 8, **dadurch gekennzeichnet, dass** in der allgemeinen Formel (II) R² und R³ voneinander verschiedenen sind und unabhängig voneinander ausgewählt sind aus linearen C₄-C₁₄-Alkylengruppen und verzweigten C₄-C₁₄-Alkylengruppen und bevorzugt aus linearen C₄-C₁₀-Alkylengruppen.

10. Pressmantel oder Transportband nach zumindest einem der vorhergehenden Ansprüche, **dadurch gekennzeichnet, dass** das gewichtsgemittelte Molekulargewicht des wenigstens einen Polycarbonatpolyols 500 bis 10.000 g/mol, bevorzugt 800 bis 4.000 g/mol und besonders bevorzugt 800 bis 3.000 g/mol beträgt.

11. Pressmantel oder Transportband nach zumindest einem der vorhergehenden Ansprüche, **dadurch gekennzeichnet, dass** die Polyolkomponente in einer Menge bis zu weniger als 50 Gew.-% mindestens ein anderes Polyol enthält, welches kein Polycarbonatpolyol ist, wobei das mindestens eine andere Polyol aus der Gruppe ausgewählt ist, welche aus Polyetherpolyolen, Polyetherpoylcarbonatpolyolen und Mischungen hiervon besteht.

12. Pressmantel oder Transportband nach zumindest einem der vorhergehenden Ansprüche, **dadurch gekennzeichnet, dass** das Polyurethan bis zu 15 Gew.-% mindestens einer Isocyanatverbindung enthält, wobei die mindestens eine Isocyanatverbindung aus der Gruppe ausgewählt ist, welche aus Methylendiphenylisocyanaten (MDI), Toluoldiisocyanaten (TODI) und beliebigen Mischungen hiervon besteht.

13. Pressmantel oder Transportband nach zumindest einem der vorhergehenden Ansprüche, **dadurch gekennzeichnet, dass** die Vernetzerkomponente wenigstens ein aliphatisches Diol und/oder wenigstens ein aliphatisches Diamin und/oder wenigstens ein aromatisches Diamin, bevorzugt Bis(4-amino-2-chloro-3,5-diethylphenyl)methan, enthält.

14. Pressmantel oder Transportband nach zumindest einem der vorhergehenden Ansprüche, **dadurch gekennzeichnet, dass**
i) die Isocyanatkomponente aus 1,3-Xylylendiisocyanat (m-XDI) und/oder 1,3-Bis(isocyanatomethyl)-cyclohexan (m-H₆XDI) besteht, die Polyolkomponente aus ein oder mehreren Polycarbonatpolyolen besteht und die Vernetzerkomponente aus Bis(4-amino-2-chloro-3,5-diethylphenyl)methan (MCDEA) besteht, oder
ii) die Isocyanatkomponente aus 1,3-Xylylendiisocyanat (m-XDI) und/oder 1,3-Bis(isocyanatomethyl)-cyclohexan (m-H₆XDI) besteht, die Polyolkomponente aus ein oder mehreren Polycarbonatpolyolen besteht, die Vernetzerkomponente aus Bis(4-amino-2-chloro-3,5-diethylphenyl)methan (MCDEA) besteht und das Polyurethan ferner bis zu 15 Gew.-% mindestens einer Isocyanatverbindung enthält, welche aus der Gruppe ausgewählt ist, welche aus Methylendiphenylisocyanaten (MDI), Toluoldiisocyanaten (TODI) und beliebigen Mischungen hiervon besteht, oder
iii) die Isocyanatkomponente aus 1,3-Xylylendiisocyanat (m-XDI) und/oder 1,3-Bis(isocyanatomethyl)-cyclohexan (m-H₆XDI) besteht, die Polyolkomponente aus ein oder mehreren Polycarbonatpolyolen sowie einem oder mehreren Polytetramethylenglycolen besteht und die Vernetzerkomponente zu mindestens 50 Gew.-% aus Bis(4-amino-2-chloro-3,5-diethylphenyl)methan (MCDEA) besteht.

15. Schuhpresse zur Entwässerung einer Faserstoffbahn, insbesondere einer Papier-, Karton-, Tissue- oder Zellstoffbahn, welche einen Pressmantel nach zumindest einem der vorstehenden Ansprüche aufweisende Presswalze umfasst, oder Maschine zur Herstellung oder Behandlung einer Faserstoffbahn, insbesondere Papier-, Karton- oder Tissuemaschine, welche ein Transportband nach zumindest einem der vorstehenden Ansprüche umfasst.
